**Europäisches Patentamt**

**European Patent Office**

**Office européen des brevets**

(19)

(11) Veröffentlichungsnummer : **0 239 740 B1**

(12)

# EUROPÄISCHE PATENTSCHRIFT

(45) Veröffentlichungstag der Patentschrift :
**19.06.91 Patentblatt 91/25**

(21) Anmeldenummer : **87101270.4**

(22) Anmeldetag : **30.01.87**

(51) Int. Cl.$^5$ : **E02D 19/18, C04B 28/08, C09K 3/00, // (C04B28/08, 14:10, 22:00)**

(54) Dichtwandmasse, Trockenmischung und Verfahren zu ihrer Herstellung.

(30) Priorität : **01.04.86 DE 3610755**

(43) Veröffentlichungstag der Anmeldung :
**07.10.87 Patentblatt 87/41**

(45) Bekanntmachung des Hinweises auf die
Patenterteilung :
**19.06.91 Patentblatt 91/25**

(84) Benannte Vertragsstaaten :
**AT BE CH DE FR IT LI LU NL**

(56) Entgegenhaltungen :
**DE-A- 3 411 009
FR-A- 2 442 917
FR-A- 2 544 735
MITTEILUNG DES LEHRSTUHLS FÜR GRUND-
BAU UND BODENMECHANIK, Technische
Universität Braunschweig, Heft Nr. 8, 1982,
Seiten 113-144, Braunschweig, DE; M. GEIL:
"Entwicklung und Eigenschaften von Dichtwandmassen und ihre Ueberwachung"**

(73) Patentinhaber : **Anneliese Zementwerke AG
W-4722 Ennigerloh i.W. (DE)**

(72) Erfinder : **Tennstedt, Hans-Joachim,
Dipl.-Chem.
c/o Anneliese Zementwerke AG Postfach 65
W-4722 Ennigerloh (DE)**
Erfinder : **Staubermann, Peter, Dipl.-Wirt-.Ing.
c/o Anneliese Zementwerke AG Postfach 65
W-4722 Ennigerloh (DE)**
Erfinder : **Esser, Peter, Dr. rer. nat.
c/o Anneliese Zementwerke AG Postfach 65
W-4722 Ennigerloh (DE)**

(74) Vertreter : **Eggert, Hans-Gunther, Dr. et al
Räderscheidtstrasse 1
W-5000 Köln 41 (DE)**

## Beschreibung

Um aus Deponien oder dem Untergrund chemischer Fabriken den Austritt von Schadstoffen, insbesondere in das Grundwasser, zu verhindern, umschließt man sie mit vertikalen Dichtwänden, die bis in Tiefe undurchlässiger Bodenschichten reichen. Derartige Dichtwände werden insbesondere als sog. Schlitzwände ausgeführt, zu deren Herstellung im Pilgerschritt-Verfahren mit Hilfe eines Spezialgreifers tiefe Löcher von etwa kreisförmigem Querschnitt und einem Durchmesser von etwa 1-3 m bis zu Tiefen von 30 m, sog. Lamellen ausgehoben werden. Den zunächst in etwas geringerem Abstand als der Öffnungsweite des Spezialgreifers erstellten Primärlamellen folgt zeitversetzt der Aushub von Sekundärlamellen, welche durch Überschneiden der Primärlamellen eine geschlossene Wand, die sog. Schlitzwand, bilden. Damit das Erdreich von den Wänden dieser Lamellen nicht einbricht, wird in die Lamellen beim Aushub eine Stützsuspension eingefüllt, um die Erdwände durch hydrostatischen Druck abzustützen. Dichtwandmassen sind selbstaushärtende thixotrope Suspensionen aus quellfähigen Tonmineralien und Zement, die bei dem sog. "Einphasenverfahren" zur Herstellung der Dichtungsschlitzwände nach Beendigung der Aushubarbeiten in den Lamellen verbleiben und hier langsam aushärten. Weil aus der Dichtwandmasse Wasser in die Erdwände um den Bodenaushub dringt, entsteht hier ein Filterkuchen, der dazu beiträgt, den vollen hydrostatischen Druck der Dichtwandmasse auf die Wände zu übertragen. Der Bodenaushub mit dem Spezialgreifer erfolgt also durch die Dichtwandmasse, die in der Regel im Maße des Aushubs kontinuierlich nachgefüllt wird.

Dichtwandmassen für das Einphasenverfahren enthalten in der Regel 13-21 Gew.% Natriumbentonit und 79-87% Zemente als Feststoffe. Es ist bekannt als Zement, außer Portlandzement, auch Hochofenzemente einzusetzen.

Wichtige technische Kennwerte von Dichtwandmassen sind u.a.

- die Viskosität, gemessen als MARSH-Zeit, als Maß für die Verarbeitbarkeit (günstig t = 45-60 sec.),
- die Filtratwasserabgabe, gemessen mit einer Filterpresse, als Maß für die Stabilität,
- das Wasserabsetzen, ebenfalls als Stabilitätsmaß,
- das Erstarrungsverhalten, als Maß für die Verarbeitbarkeitsdauer,
- die nach 28 Tagen erreichte Festigkeit, die in der Größenordnung der umgebenden Bodenfestigkeit liegen sollte ( ~ 1-2 N/mm²) und
- die Wasserdurchlässigkeit nach 28 Tagen, wobei der Permeabilitätskoeffizient nach Darcy $\leq$ 1 · 10⁻⁸ m/s sein sollte.

Die Herstellung von Dichtwandmassen für das Einphasenverfahren erfolgt bisher in der Weise, daß in einer ersten Stufe aus dem quellfähigen Tonmineral mit Schichtgitterstruktur und Wasser eine Suspension hergestellt wird. Dieser Mischvorgang wird mit Hilfe energiereicher Mischanlagen durchgeführt, um die Schichten der Gitterstruktur mit Hilfe des Wassers voneinander zu trennen und darin möglichst gleichmäßig zu verteilen. Trotzdem muß die frisch gemischte Bentonit-Suspension in der Regel noch etwa 4 Stunden aufquellen, um die erwünschten thixotropen Eigenschaften zu erhalten.

Danach wird in einem zweiten Mischvorgang der Zement zugefügt. Die so hergestellte Dichtwandmasse für das Einphasenverfahren wird dann aus einem Vorratsbehälter in die Lamellen der zu erstellenden Schlitzwand gepumpt (Dipl.-Ing. Magret Geil, "Entwicklung und Eigenschaften von Dichtwandmassen und ihre Überwachung" in Mitteilung des Lehrstuhls für Grundbau und Bodenmechanik, Technische Universität Braunschweig, Heft Nr. 8 "Dichtungswände und -sohlen", Braunschweig 1982).

Weil diese bekannte Herstellung von Dichtwandmassen für das Einphasenverfahren aufwendig und zeitraubend ist, hat sich die Erfindung die Aufgabe gestellt, die Mischanlage und das Verfahren zu vereinfachen und die Dichtwandmasse, statt wie bisher in zwei Stufen mit dem zwischengeschalteten Quellvorgang in einer Stufe herzustellen.

Dies scheiterte mit konventionellen Bindemitteln, wie z.B. mit den bisher eingesetzten Hochofen- und Portlandzementen, weil sich beim Anmischen von Zement-Bentonit-Mischungen in dem gewünschten Verhältnis nur eine instabile Suspension mit hoher Filtratwasserabgabe und starkem Wasserabsetzen bildet. Auch diese Suspensionen müssen nach der Wasserzugabe, ebenso wie der reine Bentonit, etwa 4 Stunden quellen, dann aber noch mindestens 8 Stunden verarbeitbar bleiben, weil der Aushubvorgang für eine tiefe Schlitzwandlamelle durchaus diesen Zeitraum beanspruchen kann. Durch die ständige Bewegung wird der Zement empfindlich in der beginnenden Hydratation gestört, so daß Probleme bei der Erhärtung auftreten.

Erfindungsgemäß gelingt die einstufige Herstellung von Dichtwandmassen für das Einphasenverfahren durch eine spezielle Zusammensetzung der fein gemahlenen Feststoffe, die mit Wasser auf einen bestimmten Wasser/Feststoff-Wert eingestellt werden.

Es werden die folgenden Feststoffe in den nachstehend aufgeführten Mengen gewählt :

15-25, insbesondere 18-22 Gewichtsteile eines hochquellfähigen Tonminerals,

70-84,7, vorzugsweise 76 bis 81,5 Gewichtsteile Hochofenschlacke und

0,3-5, vorzugsweise 0,5-2 Gewichtsteile eines Hydroxylionen, insbesondere Calciumhydroxid, bildenden Anregers für die Hochofenschlacke.

Die für Dichtwandmassen geeigneten quellfähigen Tonmineralien mit Schichtgitterstruktur sind bekannt. Es handelt sich insbesondere um Kaolinit, Attapulgit, Bentonite und Montmorillonite. Diese werden erfindungsgemäß vorzugsweise in der Natriumform eingesetzt. Besonders geeignet ist hochquellfähiger Na-Bentonit.

Hochofenschlacke kommt meist als Granulat in den Handel. Sie besteht gewöhnlich aus etwa 35-48% $CaO$, 30-38% $SiO_2$, 6-18% $Al_2O_3$ und geringen Mengen von MgO, MnO und Eisenoxiden. Für die Zwecke der Erfindung muß die Hochofenschlacke auf eine Feinheit von mindestens 1000 $cm^2/g$ nach Blaine vermahlen sein, um ausreichend reaktionsfähig zu sein. Vorzugsweise wird sie auf eine Mahlfeinheit von 2000 bis 3000 $cm^2/g$ nach Blaine gebracht.

Das ist ein aus wirtschaftlichen Gründen anzustrebender Mittelwert, weil größere Feinheiten erheblich höhere Mahlkosten zur Folge haben.

Die Hochofenschlacke kann teilweise durch andere latent-hydraulische Stoffe, wie z.,B. Traß, ersetzt werden. Ebenso ist es möglich, einen Teil der Hochofenschlacke durch Gesteinsmehle, insbesondere aus Kalkstein oder Kalkmergel, zu ersetzen, sofern dadurch nicht die eingangs erwähnten wichtigen Kennwerte der Dichtwandmasse beeinträchtigt werden.

Hydroxylionen, insbesondere Calciumhydroxid bildende Anreger für die Hochofenschlacke sind bekannt. Es handelt sich dabei insbesondere um Portlandzementklinker und Calciumoxid bzw. -hydroxid. Weil diese gleichfalls fein gemahlen eingesetzt werden, wird z.B, der Portlandzementklinker bevorzugt in Form von Portlandzement, Eisenportlandzement, Hochofenzement, Ölschieferzement oder Traßzement zugesetzt. Das erlaubt eine einfachere Zudosierung des Anregers. Die in den genannten Zementen enthaltene Hochofenschlacke bzw. andere latent-hydraulische oder inerte Stoffe werden auf den Anteil der Hochofenschlacke angerechnet.

Die Eigenschaften der Dichtungsmasse werden offenbar stark durch die genaue Dosierung des Hydroxylionen bildenden Anregers beeinflusst. So führt eine Konzentration von 2% fein gemahlenem Portlandzementklinker bereits zu einer Verschlechterung der Verarbeitungseigenschaften, während einer Unterdosierung von weniger als 0,5% Portlandzementklinker die Festigkeitsbildung nach 28 Tagen beeinträchtigen kann.

Die Feststoffe der erfindungsgemäßen Dichtwandmasse werden vorzugsweise nicht einzeln, sondern bereits als fein gemahlene Trocken- oder Fertigmischung eingesetzt.

Zur Herstellung der Dichtwandmasse werden die feinteiligen Feststoffe vorzugsweise in Form der vorgefertigten Trockenmischung mit einem energiereichen Mischverfahren, insbesondere unter Einwirkung hoher Scherkräfte, mit der erforderlichen Wassermenge verarbeitet. Diese intensive Vermischung mit Wasser kann mit den gleichen Anlagen erfolgen, die für die Herstellung von Bentonitsuspensionen bei dem oben beschriebenen zwei- bzw. mehrstufigen Verfahren üblich sind. Die erfindungsgemäße Dichtwandmasse wird auf diese Weise auf einen Wasser/Feststoff-Wert (W/F-Wert) von 1,5 bis 4, vorzugsweise 2,5 bis 3, eingestellt.

Auch den erfindungsgemäßen Trockenmischungen oder Dichtwandmassen können für diesen Zweck übliche Zusätze beigegeben werden, die das Fließverhalten während des Mischvorgangs, die Konsistenz oder das Abbinden beeinflussen, wie z.B. Abbindeverzögerer oder Trialkoxysilane.

Angesichts der erfindungsgemäßen Wahl der Feststoffkomponenten und ihrer Mengen bzw. der Zusammensetzung der Trockenmischung gelingt es überraschenderweise in einer Stufe, d.h. mit einem einzigen intensiven Mischvorgang, eine Dichtwandmasse für das Einphasenverfahren zur Herstellung von Dichtungsschlitzwänden zu erzeugen, die direkt nach ihrer Herstellung in die Lamellen gefüllt werden kann. Es entfallen also die bei der bekannten Dichtwandmassen-Herstellung erforderliche mehrstündige Quellzeit und der zweite Mischvorgang mit dem Zement. Trotzdem erfüllen die erfindungsgemäßen Dichtwandmassen alle geforderten Eigenschaften, wie geringe Filtratwasserabgabe, lange Verarbeitbarkeit und geringe Wasserdurchlässigkeit bei 28 Tage Festigkeiten in der Größenordnung von 1,5 $N/mm^2$. Die Qualität der Dichtwandmasse läßt sich vor Ort leicht an den Bedarf und den Verbrauch anpassen und der Einfluss der Thixotropie ist geringer als bei herkömmlichen Dichtwandmassen, so daß auch höhere Feststoffmengen im Einphasenverfahren verarbeitet werden können.

Beispiel

In einem Praxisversuch wurden

396 kg     Hochofenschlacke
4 kg       Zementklinker (2000 $cm^2/g$)
100 kg     Natriumbentonit

mit 1500 l Wasser (W/F-Wert = 3,0) mit Hilfe eines CEMIX[R] 400 Hochgeschwindigkeitsmischers (1500 U/min) der Firma Crealius 4 Minuten lang gerührt. Anschliessend wurde die Konsistenz dieser Dichtwandmasse nach MARSH, die Filtratwasserabgabe im Filterpressenversuch und das Wasserabsetzen im 250 ml Messzylinder bestimmt. Es ergaben sich die aus der nachstebenden Tabelle ersichtlichen Resultate unmittelbar nach der Herstellung bzw. nach 12 Stunden Ruhezeit :

|  | Nach Zubereitung | Nach 12 Stunden |
|---|---|---|
| MARSH-Zeit (s) | 49 | 60 |
| Filtratwasser- abgabe (ml) | 30 | 40 |
| Wasserabsetzen (%) | Spuren | 0,9 |

Die Festigkeit der Masse betrug nach 14 Tagen 0,5 N/mm$^2$, nach 28 Tagen 1,5 N/mm$^2$. Die Masse hatte also auch nach 12 Stunden noch sehr gute Verarbeitungseigenschaften und erreichte nach 28 Tagen die gewünschten Festigkeiten. Der Permeabilitätskoeffizient nach Darcy wurde nach 28 Tagen zu $k = 4 \cdot 10^{-9}$ m/sec bestimmt. Die Dichtwandmasse zeigte also auch in einer testweise verfüllten Lamelle sehr günstige Eigenschaften.

**Ansprüche**

1. Trockenmischung zur einstufigen Herstellung von Dichtwandmassen, dadurch gekennzeichnet, daß sie eine fein gemahlene Mischung von

15 – 25 Gew.-Teilen eines hochquellfähigen Tonminerals,
70 – 84,7 " Hochofenschlacke und
0,3 – 5 " eines Hydroxylionen bildenden Anregers für die Hochofenschlacke

enthält.

2. Trockenmischung nach Anspruch 1, dadurch gekennzeichnet, daß sie

```
18  - 22 Gew.-Teile eines hochquellfähigen
                     Tonminerals,
76  - 81,5    "      Hochofenschlacke und
0,5 - 2       "      eines Hydroxylionen
                     bildenden Anregers für die
                     Hochofenschlacke

enthält.
```

3. Trockenmischung nach Anspruch 1 oder 2, dadurch gekennzeichnet, daß man als Hydroxylionen bildenden Anreger für die Hochofenschlacke Portlandzementklinker einsetzt.

4. Trockenmischung nach einem der Ansprüche 1 bis 3, dadurch gekennzeichnet, daß die Hochofenschlacke teilweise durch andere latent hydraulische Stoffe ersetzt ist.

5. Trockenmischung nach einem der Ansprüche 1 bis 4, dadurch gekennzeichnet, daß man als hochquellfähiges Tonmineral Bentonit in der Natriumform einsetzt.

6. Trockenmischung nach einem der Ansprüche 1 bis 5, dadurch gekennzeichnet, daß der Portlandzementklinker in Form von Portlandzement, Eisenportlandzement, Hochofenzement oder Traßzement zugesetzt ist.

7. Trockenmischung nach einem der Ansprüche 1 bis 6, dadurch gekennzeichnet, daß die Hochofenschlacke auf eine Feinheit von mindestens 1000, vorzugsweise 2000 bis 3000 $cm^2/g$ nach Blaine, vermahlen ist.

8. Dichtwandmasse für das Einphasenverfahren zur Herstellung von Dichtungsschlitzwänden, dadurch gekennzeichnet, daß

```
15  - 25   Gew.-Teile eines hochquellfähigen
                      Tonminerals,
70  - 84,7    "       Hochofenschlacke und
0,3 - 5       "       eines Hydroxylionen bil-
                      denden Anregers für die
                      Hochofenschlacke
```

in fein vermahlener Form mit Wasser auf einen Wasser/Feststoff-Wert von 1,5 bis 4, vorzugsweise 2,5 bis 3, eingestellt sind.

9. Dichtwandmasse nach Anspruch 8, dadurch gekennzeichnet, daß die Feststoffe in folgenden Mengen vorliegen :

```
18  - 22   Gew.-Teile eines hochquellfähigen Ton-
                      minerals,
76  - 81,5    "       Hochofenschlacke und
0,5 - 2       "       eines Hydroxylionen bil-
                      denden Anregers für die
                      Hochofenschlacke.
```

10. Dichtwandmasse nach Anspruch 8 oder 9, dadurch gekennzeichnet, daß man als Hydroxylionen bildenden Anreger für die Hochofenschlacke Portlandzementklinker einsetzt.

11. Dichtwandmasse nach einem der Ansprüche 8 bis 10, dadurch gekennzeichnet, daß man als hochquellfähiges Tonmineral Bentonit in der Natriumform einsetzt.

12. Dichtwandmasse nach einem der Ansprüche 8 bis 11, dadurch gekennzeichnet, daß die Feststoffe in Form der Trockenmischung nach einem der Ansprüche 1 bis 7 eingebracht sind.

13. Verfahren zur Herstellung einer Dichtwandmasse nach einem der Ansprüche 8 bis 12, dadurch gekennzeichnet, daß man die feinteiligen Feststoffe mit einem energiereichen Mischverfahren, insbesondere unter Einwirkung hoher Scherkräfte, mit der erforderlichen Wassermenge verarbeitet.

14. Verfahren zur Herstellung von Dichtungsschlitzwänden nach dem Einphasenverfahren, dadurch gekennzeichnet, daß man die Dichtwandmasse nach einem der Ansprüche 8 bis 12 direkt nach ihrer Herstellung in die Lamellen füllt.

## Revendications

1. Mélange à sec pour la production en une seule étape de masses pour murs d'étanchéité, caractérisé en ce qu'il contient un mélange finement broyé de

| | | |
|---|---|---|
| 15-25 parties en poids | | d'une matière minérale argileuse très gonflante, |
| 70-84,7 " " | | de laitier de haut-fourneau et |
| 0,3-5 " " | | d'un activateur formant des ions hydroxyle pour le laitier de haut-fourneau. |

2. Mélange à sec suivant la revendication 1, caractérisé en ce qu'il contient

| | | |
|---|---|---|
| 18-22 parties en poids | | d'une matière minérale argileuse fortement gonflante, |
| 76-81,5 " " | | d'un laitier de haut-fourneau et |
| 0,5-2 " " | | d'un activateur formant des ions hydroxyle pour le laitier de haut-fourneau. |

3. Mélange à sec suivant la revendication 1 ou 2, caractérisé en ce qu'un klinker de ciment Portland est utilisé comme activateur formant des ions hydroxyle pour le laitier de haut-fourneau.

4. Mélange à sec suivant l'une des revendications 1 à 3, caractérisé en ce que le laitier de haut-fourneau est partiellement remplacé par d'autres substances hydrauliques latentes.

5. Mélange à sec suivant l'une des revendications 1 à 4, caractérisé en ce qu'on utilise comme matière minérale argileuse fortement gonflante, de la bentonite sous la forme sodique.

6. Mélange à sec suivant l'une des revendications 1 à 5, caractérisé en ce que le klinker de ciment Portland est ajouté sous forme de ciment Portland, de ciment Portland de fer, de ciment de haut-fourneau ou de ciment de Trass.

7. Mélange à sec suivant l'une des revendications 1 à 6, caractérisé en ce que le laitier de haut-fourneau est broyé à un degré de finesse d'au moins 1000, de préférence de 2000 à 3000 $cm^2/g$ selon Blaine.

8. Masse étanche destinée au procédé à phase unique pour la production de rideaux souterrains étanches, caractérisée en ce que

| 15-25 parties en poids | | d'une matière minérale argileuse fortement gonflante, |
| 70-84,7 " | " | d'un laitier de haut-fourneau et |
| 0,3-5 " | " | d'un activateur formant des ions hydroxyle pour le laitier de haut-fourneau |

sous une forme finement broyée, sont réglées avec de l'eau à une valeur eau/matière solide de 1,5 à 4, de préférence de 2,5 à 3.

9. Masse pour murs d'étanchéité suivant la revendication 8, caractérisée en ce que les matières solides sont présentes en les quantités suivantes :

| 18-22 parties en poids | | d'une matière minérale argileuse fortement gonflante, |
| 76-81,5 " | " | d'un laitier de haut-fourneau et |
| 0,5 - 2 " | " | d'un activateur formant des ions hydroxyle pour le laitier de haut-fourneau . |

10. Masse pour murs d'étanchéité suivant la revendication 8 ou 9, caractérisée en ce qu'on utilise du klinker de ciment Portland comme activateur formant des ions hydroxyle pour le laitier de haut-fourneau.

11. Masse pour murs d'étanchéité suivant l'une des revendications 8 à 10, caractérisée en ce qu'on utilise comme matière minérale argileuse fortement gonflante, la bentonite sous la forme sodique.

12. Masse pour murs d'étanchéité suivant l'une des revendications 8 à 11, caractérisée en ce que les matières solides sont introduites sous la forme du mélange à sec selon l'une des revendications 1 à 7.

13. Procédé de production d'une masse pour murs d'étanchéité suivant l'une des revendications 8 a 12, caractérisé en ce qu'on met en oeuvre les matières solides finement divisées par un processus de mélange très énergétique, notamment sous l'action de grandes forces de cisaillement, avec la quantité nécessaire d'eau.

14. Procédé de production de rideaux souterrains étanches suivant le procédé à phase unique, caractérisé en ce que la masse pour murs d'étanchéité selon l'une des revendications 8 à 12 est chargée immédiatement après sa production dans les lamelles.

## Claims

1. A dry ready mixed material for the one-step manufacture of diaphragm wall materials, characterized in that it contains a finely ground mixture of

| 15 - 25 | parts by weight of a | highly swellable clay mineral, |
| 70 - 84.7 | " " " | blast furnace slag and |
| 0.3 - 5 | " " " | hydroxyl ions-forming activator for the blast furnace slag. |

2. A dry ready mixed material as claimed in claim 1, characterized in that it contains

7

|  |  |  |  |  |  |
|---|---|---|---|---|---|
| 18 | – 22 | parts by weight of a | highly swellable clay mineral, |  |  |
| 76 | – 81.5 | " | " | " | blast furnace slag and |
| 0.5 | – 2 | " | " | " | hydroxyl ions-forming activator for the blast furnace slag. |

3. A dry ready mixed material as claimed in claim 1 or 2, characterized by using portland cement clinker as hydroxyl ions-forming activator for the blast furnace slag.

4. A dry ready mixed material as claimed in any of claims 1 to 3, characterized in that the blast furnace slag is partly substituted by other latent hydraulic substances.

5. A dry ready mixed material as claimed in any of claims 1 to 4, characterized by using bentonite in the sodium form as highly swellable clay mineral.

6. A dry ready mixed material as claimed in any of claims 1 to 5, characterized in that the portland cement clinker is added in the form of portland cement, iron portland cement, blast furnace cement or trass cement.

7. A dry ready mixed material as claimed in any of claims 1 to 6, characterized in that the blast furnace slag is ground to a fineness of at least 1000, preferably 2000 to 3000 cm²/g according to Blaine.

8. A diaphragm wall material for the one-step process of manufacturing impermeable trench walls, characterized in that

|  |  |  |  |  |  |
|---|---|---|---|---|---|
| 15 | – 25 | parts by weight of a | highly swellable clay mineral, |  |  |
| 70 | – 84.7 | " | " | " | blast furnace slag and |
| 0.3 | – 5 | " | " | " | hydroxyl ions-forming activator for the blast furnace slag, |

in the finely ground condition are adjusted by means of water to a water/solids value of from 1.5 to 4, preferably from 2.5 to 3.

9. A diaphragm wall material as claimed in claim 8, characterized in that the solids are present in the following amounts :

|  |  |  |  |  |  |
|---|---|---|---|---|---|
| 18 | – 22 | parts by weight of a | highly swellable clay mineral, |  |  |
| 76 | – 81.5 | " | " | " | blast furnace slag and |
| 0.5 | – 2 | " | " | " | hydroxyl ions-forming activator for the blast furnace slag. |

10. A diaphragm wall material as claimed in claim 8 or 9, characterized by using portland cement clinker as hydroxyl ions-forming activator.

11. A diaphragm wall material as claimed in any of claims 8 to 10, characterized by using bentonite in the sodium form as highly swellable clay mineral.

12. A diaphragm wall material as claimed in any of claims 8 to 11, characterized in that the solids are introduced in the form of the dry ready mixed material according to any of claims 1 to 7.

13. A method of manufacturing a diaphragm wall material as claimed in any of claims 8 to 12, characterized by processing the finely-divided solids with the required amount of water by means of a high-energy mixing process, in particular by the action of shearing forces.

14. A method of manufacturing impermeable trench walls according to the one-step process, characterized by filling the diaphragm wall material as claimed in any of claims 8 to 12 into the excavations of the trench wall immediately after they have been manufactured.